Europäisches Patentamt

European Patent Office

Office européen des brevets

(19)

(11) Publication number: **0 305 672 B1**

# EUROPEAN PATENT SPECIFICATION

(12)

(45) Date of publication of patent specification: **19.08.92**  (51) Int. Cl.5: **B01D  61/00,** //A61M1/18

(21) Application number: **88110184.4**

(22) Date of filing: **25.06.88**

(54) **A diffusion and/or filtration apparatus, a blank for the main part of the housing intended for said apparatus and a method of manufacturing the apparatus.**

(30) Priority: **31.08.87 SE 8703366**

(43) Date of publication of application:
**08.03.89 Bulletin  89/10**

(45) Publication of the grant of the patent:
**19.08.92 Bulletin  92/34**

(84) Designated Contracting States:
**BE CH DE ES FR GB IT LI NL**

(56) References cited:
**DE-A- 2 818 214
DE-U- 8 623 037
FR-A- 2 514 647
JP-A-61 109 573
US-A- 4 125 468**

(73) Proprietor: **Gambro Dialysatoren GmbH & Co. KG
Postfach 1323
W-7450 Hechingen(DE)**

(72) Inventor: **Spranger, Kurt
Obere Strasse 43
W-7403 Ammerbuch-Entringen(DE)**

(74) Representative: **Boberg, Nils Gunnar Erik
Gambro AB Patent Department Box 10101
S-220 10 Lund(SE)**

# Description

## TECHNICAL FIELD

The present invention relates to a method of manufacturing a diffusion and/or filtration apparatus, including a housing consisting of a cylindrical open ended main part closed by two end caps and being provided with an inlet and an outlet for a first fluid situated on said end caps and at least one outlet for a second fluid situated on said main part, said first fluid being adapted to flow through the fibers of a bundle of semipermeable hollow fibers arranged between two end walls within the housing and said second fluid being adapted to be removed from the space outside the fibers through said at least one outlet for the second fluid.

The invention relates furthermore to a blank for the main part of said housing and to an apparatus provided by the method.

Devices of the above kind are used for e g different kinds of medical treatment such as hemodialysis, hemofiltration, plasmapheresis and immunotherapy. Other fields of use are for instance dialysis in general and filtration in general, for example in connection with cleaning or desalination of sea water.

## TECHNICAL STANDPOINT

In connection with the production of devices of the above kind each end of the housing with a bundle of fibers placed therein is normally enclosed in a casting mould to which the material for the adjacent end wall is fed in a liquid condition penetrating into and around the fibers. The penetration is so controlled by the casting that the penetration into the fibers is less than around the fibers, making it possible to open the openings of the fibers by making a cut between the surfaces restricting the two different penetration depths, respectively.

How the end walls may be moulded is described more in detail in for instance EP-B-0 165 478, US-A-4 227 295 and US-A-4 329 229.

Before the moulding of the end walls the fibers are normally flushed by a cleaning liquid as well inside as outside the fibers. This flushing is normally made in separate housing having the simple form of an open-ended tube. If it instead should be made in the final housing of the device there is a risk that a part of the cleaning liquid may be remaining in the housing, especially in inlets and outlets arranged in the housing wall.

## DESCRIPTION OF THE INVENTION

One object of the present invention is to provide a construction of a diffusion and/or filtration apparatus in which the above discussed flushing of the fibers before the moulding of the end walls may be made in the final housing of the apparatus without the above mentioned risks. This is made in accordance with the following claims.

The blank is characterized in that said at least one outlet for the second fluid, which is arranged on the main part of the housing, is closed by a penetratable membrane, providing a temporary closure which prevents the flushing liquid from entering said outlet for the second fluid.

The blank is preferably also provided with an inlet for said second fluid, which also is closed by a penetratable membrane. Such an inlet is necessary, if the apparatus is intended to be used for e g dialysis. If it on the other hand is intended only to be used for filtration it will be enough, if the housing is provided with only an outlet for the filtrate beside the inlet and the outlet for a filtrated liquid.

In the ready made apparatus said at least one outlet and other possible closed outlets and inlets for said second fluid are at least partly opened in that said penetratable membrane or membranes has/have been penetrated.

This penetration can be made in such a way that a part of the penetrated membrane is arranged at an angle as regards the opening provided by the penetration, thereby serving as a baffle, guiding the flow of said second fluid. Said at least one outlet for the second fluid and possible other outlets and inlets for said fluid consist preferably of a nipple arranged at a wall part of the housing, which is separated from the fiber bundle by a fluid distribution channel. An advantage of this construction is that the membranes may be penetrated easily without damaging the fiber bundle.

The invention relates also to a method of manufacturing a diffusion and/or filtration apparatus of the above defined kind.

The method is characterized in that said at least one outlet for the second fluid, which is arranged on the main part, is closed by a temporary closure before said bundle of hollow fibers is being flushed by a special flushing fluid inside and outside the fibers arranged within said cylindrical open-ended main part of the housing, whereafter the ends of the fibers are moulded into said end walls and opened by cutting, whereupon the apparatus finally is provided with said two end caps.

Said temporary closure is preferably provided by a penetratable membrane, providing the possibility of making the above described baffles, guiding the flow of said second fluid.

The penetratable membrane or any other temporary closure is preferably arranged close to the inside wall of the cylindrical open-ended main part of the housing.

After the opening of the ends of the hollow fibers said fibers are being flushed a second time in order to remove any possible contamination due to the cutting.

## SHORT DESCRIPTION OF THE DRAWINGS

Fig 1 and 2 are showing one end of an apparatus according to the invention at two phases of its manufacturing.

Fig 3a and 3b are showing two different modifications of the apparatus according to the present invention, the sections being taken just inside the moulded end wall.

## PREFERRED EMBODIMENT OF THE INVENTION

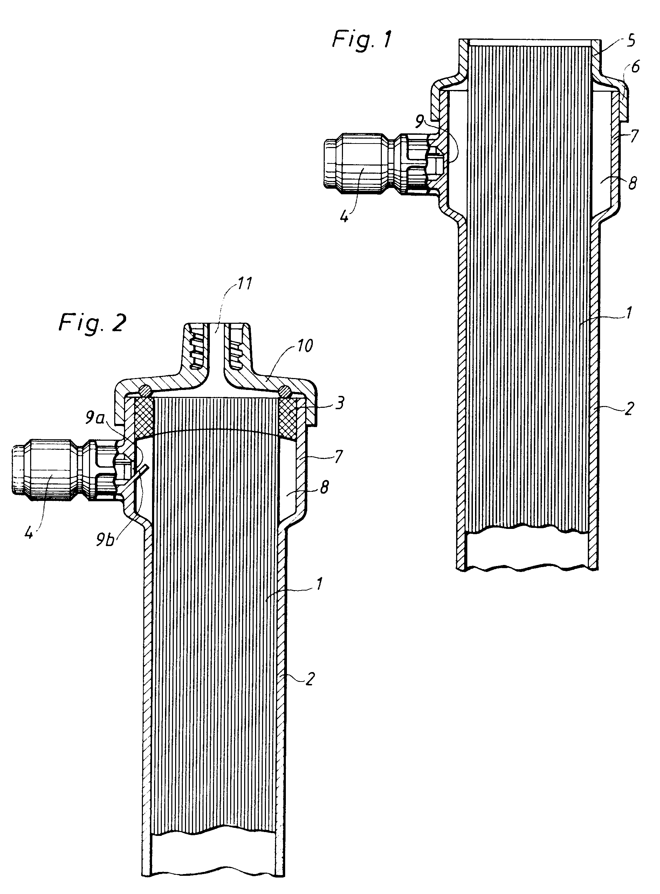

Fig 1 is showing a bundle of hollow fibers 1 in a housing 2 before the moulding of the end walls 3 shown in fig 2. A nipple 4 intended to serve as the above mentioned at least one outlet is arranged at an enlarged part 7 of the housing 2. At the end of the fibers 1 the bundle is supported by a restricted part 5 of a ring 6. This ring 6 is intended to serve as an inlet and/or an outlet for a special flushing liquid intended for flushing the inside and the outside of the fibers before the casting of the end wall 3. This ring 6 can also as described more in detail in the Swedish patent application 87.03368-4, filed simultaneously with the present application, be modified to serve as a part of the mould for the end wall 3.

The nipple 4 is as mentioned above arranged on an enlarged part 7 of the housing 2, providing a distribution channel 8 for any liquid taken into or out from the apparatus through the nipple 4.

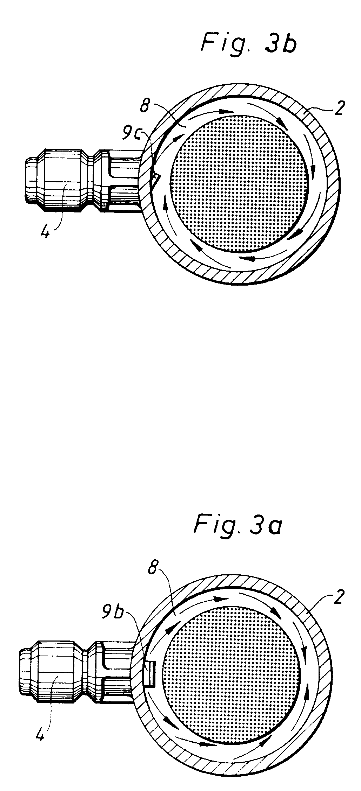

In the blank shown in fig 1 the inner opening of the nipple 4 is closed by a penetratable membrane 9. As shown in fig 2 said membrane may be penetrated partly in order to provide on one hand an opening 9a and on the other hand an obliquely arranged baffle 9b, shown also in fig 3a. The baffle may be formed by a heated die and due to the form of said die it can either be given the form 9b shown in fig 3a or the form 9c shown in fig 3b, providing different guiding of the fluid either entering or leaving through the nipple 4.

After the casting of the end walls 3 the ends of the fibers are opened by a cut through said end walls and through the enlarged parts 7 of the housing 2. After a second flushing of the opened ends of the fibers the apparatus is finally provided with a lid 10 with an inlet and/or outlet 11 for the fluid which is intended to be sent through the fibers.

## PREFERED MODE OF THE METHOD ACCORDING TO THE INVENTION

As mentioned above, the invention relates also to a method of manufacturing a diffusion and/or filtration apparatus of the above defined kind, i e including a housing 2 consisting of a cylindrical open ended main part closed by two end caps 10 and being provided with an inlet and an outlet 11 for a first fluid and at least one outlet 4 for a second fluid, said first fluid being adapted to flow through the fibers of a bundle of semipermeable hollow fibers arranged between two end walls within the housing and said second fluid being adapted to be removed from the space outside the fibers through said at least one outlet for the second fluid.

The method is characterized in that said at least one outlet 4 for the second fluid, which is arranged on the main part, is closed by a temporary closure before said bundle of hollow fibers is being flushed by a special flushing fluid inside and outside the fibers arranged within said cylindrical open-ended main part of the housing, whereafter the ends of the fibers are moulded into said end walls and opened by cutting, whereupon the apparatus finally is provided with said two end caps 10.

The temporary closure is preferably provided by a penetratable membrane 9 arranged close to the inside wall of the cylindrical open-ended main part.

In order to remove any possible contamination caused by the cutting of the fibers they are preferably being flushed a second time after said cutting.

## Claims

1. A method of manufacturing a diffusion and/or filtration apparatus, including a housing (2) consisting of a cylindrical open ended main part closed by two end caps (10) and being provided with an inlet and an outlet (11) for a first fluid situated on said end caps and at least one outlet (4) for a second fluid situated on said main part, said first fluid being adapted to flow through the fibers (1) of a bundle of semipermeable hollow fibers arranged between two end walls (3) within the housing (2) and said second fluid being adapted to be removed from the space outside the fibers (1) through said at least one outlet (4) for the second fluid, **characterized** in that said at least one outlet (4) for the second fluid, which is arranged on the main part of the housing (2) is closed by a temporary closure (9) at an internal location proximate the internal wall of the housing (2) until after said bundle of hollow fibers (1) has been flushed by a special flushing fluid inside and outside the fibers arranged within said cylindrical open ended main part, whereafter the ends of the fibers (1) are moulded into said end walls (3) and opened by cutting, whereupon the apparatus finally is provided with said two end caps (10).

2. A method according to claim 1, **characterized** in that said temporary closure is provided by a penetratable membrane (9).

3. A method according to any of the claims 1-2, **characterized** in that the inside of the fibers is being flushed a second time after the opening of the fiber ends.

4. Apparatus obtained by the method claimed in claim 2, **characterized** in that said at least one outlet (4) and other possible closed outlets and inlets (4) for said second fluid are at least partly opened in that said penetratable membrane or membranes (9) has/have been penetrated.

5. Apparatus according to claim 4, **characterized** in that a part of the penetrated membrane (9b,9c) is arranged at an angle as regards the opening (9a) provided by the penetration, thereby serving as a baffle, guiding the flow of said second fluid.

6. Apparatus according to claim 4 or 5, **characterized** in that said at least one outlet (4) for the second fluid and possible other outlets and inlets (4) for said fluid consist of a nipple arranged at a wall part (7) of the housing (2), which is separated from the fibre bundle by a fluid distribution channel (8).

7. A blank for the main part of the housing (2) of the apparatus according to any of the claims 4-6 intended to be used according to the method of claim 2 for providing an apparatus according to any of the claims 4-6, **characterized** in that said at least one outlet (4) for the second fluid, which is arranged on the main part of the housing (2) is closed by a penetratable membrane (9).

8. A blank according to claim 7, **characterized** in that it is provided also with an inlet (4) for said second fluid, which also is closed by a penetratable membrane (9).

**Patentansprüche**

1. Verfahren zum Herstellen eines Diffusions-und/oder Filtriergerätes, mit einem Gehäuse (2), welches aus einem zylindrischen Hauptteil mit offenen Enden besteht, welches von zwei Endkappen (10) verschlossen wird und mit einem Einlaß und einem Auslaß (11) für ein erstes Fluid versehen ist, welche an den Endkappen angeordnet sind, sowie mit zumindest einem Auslaß (4) für ein zweites Fluid, welcher an dem Hauptteil angeordnet ist, wobei das erste Fluid so ausgelegt ist, daß es durch die Fasern (1) eines Bündels halbdurchlässiger hoher Fasern hindurchfließt, welche zwischen zwei Stirnwänden (3) innerhalb des Gehäuses (2) angeordnet sind, und das zweite Fluid so ausgelegt ist, daß es aus dem Raum außerhalb der Fasern (1) durch den zumindest einen Auslaß (4) für das zweite Fluid entfernt werden kann, dadurch gekennzeichnet, daß der zumindest eine Auslaß (4) für das zweite Fluid, welcher an dem Hauptteil des Gehäuses (2) angeordnet ist, durch einen temporären Verschluß (9) an einer inneren Stelle verschlossen ist, die nahe an der Innenwand des Gehäuses (2) liegt, bis das Bündel hohler Fasern (1) durch ein spezielles Spülfluid innerhalb und außerhalb der Fasern gespült ist, welche in dem zylindrischen Hauptteil mit offenen Enden angeordnet sind, wonach die Enden der Fasern (1) in die Stirnwände (3) eingegossen und durch einen Schnitt geöffnet werden, woraufhin das Gerät schließlich mit den beiden Endkappen (10) versehen wird.

2. Verfahren nach Anspruch 1, dadurch gekennzeichnet, daß der temporäre Verschluß durch eine durchstoßbare Membran (9) bereitgestellt wird.

3. Verfahren nach einem der Ansprüche 1 oder 2, dadurch gekennzeichnet, daß das Innere der Fasern nach dem Öffnen der Faserenden ein zweites Mal gespült wird.

4. Vorrichtung, die man durch das in Anspruch 2 beanspruchte Verfahren erhält, dadurch gekennzeichnet, daß der zumindest eine Auslaß (4) und andere möglicherweise verschlossene Auslässe und Einlässe (4) für das zweite Fluid zumindest teilweise dadurch geöffnet sind, daß die durchstoßbare Membran oder Membranen (9) durchstoßen ist bzw. sind.

5. Gerät nach Anspruch 4, dadurch gekennzeichnet, daß ein Teil der durchstoßenen Membran (9b, 9c) unter einem Winkel bezüglich der Öffnung (9a) angeordnet ist, die durch das Durchstoßen bereitgestellt wird, und damit als eine Umlenkplatte dient, welche den Strom des zweiten Fluids führt.

6. Gerät nach Anspruch 4 oder 5, dadurch gekennzeichnet, daß der zumindest eine Auslaß (4) für das zweite Fluid und mögliche andere Auslässe und Einlässe (4) für das Fluid aus einem Nippel bestehen, der an einem Wandteil (7) des Gehäuses (2) angeordnet ist, welches von dem Faserbündel durch einen Fluidverteilungskanal (8) getrennt ist.

7. Rohling für den Hauptteil des Gehäuses (2) eines Gerätes gemäß einem der Ansprüche 4 bis 6, welcher für eine Verwendung nach dem Verfahren des Anspruches 2 vorgesehen ist, um ein Gerät nach einem der Ansprüche 4 bis 6 bereitzustellen, dadurch gekennzeichnet, daß zumindest der eine Auslaß (4) für das zweite Fluid, welcher an dem Hauptteil des Gehäuses (2) angeordnet ist, durch eine durchstoßbare Membran (9) verschlossen ist.

8. Rohling nach Anspruch 7, dadurch gekennzeichnet, daß er ebenso mit einem Einlaß (4) für das zweite Fluid versehen ist, welcher ebenfalls durch eine durchstoßbare Membran (9) verschlossen ist.

**Revendications**

1. Procédé de fabrication d'un appareil de diffusion et/ou de filtration, qui comprend une enveloppe (2) constituée d'une partie principale cylindrique à extrémités ouvertes, fermée par deux chapeaux d'extrémité (10) et comportant une entrée et une sortie (11) pour un premier fluide situées sur lesdits chapeaux d'extrémité et au moins une sortie (4) pour un deuxième fluide située sur ladite partie principale, ledit premier fluide devant circuler à travers les fibres (1) d'un faisceau de fibres creuses semi-perméables disposées entre deux parois d'extrémité (3) à l'intérieur de l'enveloppe (2) et ledit deuxième fluide devant être extrait de l'espace défini à l'extérieur des fibres (1) par l'intermédiaire de ladite au moins une sortie (4) pour le deuxième fluide, caractérisé en ce que ladite au moins une sortie (4) pour le deuxième fluide, qui est placée sur la partie principale de l'enveloppe (2), est fermée par une fermeture temporaire (9) à un endroit intérieur proche de la paroi intérieure de l'enveloppe (2) jusqu'après le rinçage dudit faisceau de fibres creuses (1) au moyen d'un fluide de rinçage spécial à l'intérieur et à l'extérieur des fibres placées dans ladite partie principale cylindrique à extrémités ouvertes, après quoi les extrémités des fibres (1) sont moulées dans lesdites parois d'extrémités (3) et ouvertes par une opération de coupe, l'appareil étant finalement muni desdits deux chapeaux d'extrémité (10).

2. Procédé suivant la revendication 1, caractérisé en ce que ladite fermeture temporaire est constituée par une membrane pénétrable (9).

3. Procédé suivant l'une quelconque des revendications 1 et 2, caractérisé en ce que l'intérieur des fibres est rincé une deuxième fois après l'ouverture des extrémités des fibres.

4. Appareil obtenu par le procédé suivant la revendication 2, caractérisé en ce que ladite au moins une sortie (4) et les autres sorties et entrées fermées possibles (4) pour ledit deuxième fluide sont au moins partiellement ouvertes, du fait que la ou lesdites membranes pénétrables (9) ont été pénétrées.

5. Appareil suivant la revendication 4, caractérisé en ce qu'une partie de la membrane pénétrée (9b,9c) est inclinée par rapport à l'ouverture (9a) créée par la pénétration, de sorte qu'elle sert de déflecteur pour guider l'écoulement dudit deuxième fluide.

6. Appareil suivant la revendication 4 ou 5, caractérisé en ce que ladite au moins une sortie (4) pour le deuxième fluide et les autres sorties et entrées possibles (4) pour ledit fluide consistent en un raccord placé dans une partie de paroi (7) de l'enveloppe (2), qui est séparé du faisceau de fibres par un canal de distribution de fluide (8).

7. Ebauche pour la partie principale de l'enveloppe (2) de l'appareil suivant une quelconque des revendications 4 à 6, prévue pour être utilisée conformément au procédé de la revendication 2 pour fabriquer un appareil conforme à l'une quelconque des revendications 4 à 6, caractérisée en ce que ladite au moins une sortie (4) pour le deuxième fluide, qui est placée sur la partie principale de l'enveloppe (2), est fermée par une membrane pénétrable (9).

8. Ebauche suivant la revendication 7, caractérisée en ce qu'elle comporte également une entrée (4) pour ledit deuxième fluide, qui est également fermée par une membrane pénétrable (9).

*Fig. 1*

*Fig. 2*

## Fig. 3b

## Fig. 3a